# NEUE EUROPÄISCHE PATENTSCHRIFT

(11) **EP 0 796 756 B2**
(45) Veröffentlichungstag und Bekanntmachung des Hinweises auf die Entscheidung über den Einspruch: **11.10.2006**
(45) Hinweis auf die Patenterteilung: 15.01.2003
(21) Anmeldenummer: 97102392.4
(22) Anmeldetag: 14.02.1997
(51) Int. Cl.: B60K 37/06, G06F 3/033

(54) **Bedienvorrichtung für menügesteuerte Funktionen eines Fahrzeugs**
Device for controlling vehicle functions organised as a menu
Dispositif de commande de fonctions d'un véhicule contrôlés à partir d'un menu

(30) Priorität: 19.03.1996 DE 19610700; 08.11.1996 DE 19646226
(43) Veröffentlichungstag der Anmeldung: 24.09.1997
(73) Patentinhaber: Bayerische Motoren Werke Aktiengesellschaft, 80788 München (DE)
(72) Erfinder: Künzner, Hermann, 85356 Freising (DE); Wiedemann, Harald, 82383 Hohenpeissenberg (DE)

(56) Entgegenhaltungen:
- EP-A- 0 701 926
- DE-A1- 3 836 555
- DE-A1- 4 205 875
- DE-A1- 4 400 790
- DE-C1- 3 514 438
- US-A- 4 868 549
- US-A- 5 270 689
- US-A- 5 327 162

## Beschreibung

Die Erfindung bezieht sich auf eine Bedienvorrichtung für menügesteuerte Funktionen eines Kraftfahrzeugs.

Eine Bedienvorrichtung ist aus der DE 35 14 438 C bekannt. Beim Betätigungsteil handelt es sich um eine Vielzahl von Tastschaltern, die um den Bildschirm herum angeordnet sind. Damit wird die Funktion bzw. das Menü ausgewählt, das auf dem Bildschirm in unmittelbarer Nähe zur jeweiligen Betätigungstaste dargestellt wird. Die bekannte Bedienvorrichtung erfordert einen erheblichen Platzbedarf, da sie neben der Bildschirmfläche auch noch Platz für die Betätigungstasten in der unmittelbaren Nähe des Bildschirms erfordert. Häufig steht ein derartiger Platz nicht zur Verfügung.

Hinzu kommt das Problem der Anordnung des Bildschirms und der Betätigungstasten unter ergonomischen Gesichtspunkten. Die benachbarte Anordnung von Bildschirm und Betätigungstasten ist ergonomisch ungünstig, da hohe Blickzuwendungszeiten für die Auswahl und Betätigung der gewünschten Betätigungstaste erforderlich sind. Bei dem Einsatz in Fahrzeugen steht oftmals diese Zeit nicht zur Verfügung.

Ferner ist es bei Personalcomputern bekannt, die Auswahl von menügesteuerten Funktionen mit Hilfe einer Maus, eines Trackballs, Touch-Screens, Joysticks usw. vorzunehmen. Bei Anwendung in einem Fahrzeug ergibt sich daraus die Schwierigkeit der fehlenden mechanischen Rückkopplung für die Lage der angewählten Funktion, ferner die Gefahr des "Davonlaufens", d.h. das Überschreiten des Bildschirms durch den mit Hilfe des Betätigungsteils auf der Bildschirmoberfläche bewegten Cursor, Rahmen oder das optische Feld sowie die Gefahr der versehentlichen, durch mechanische Erschütterungen bedingten Veränderung der angewählten Funktion durch entsprechende Bewegungen des Betätigungsteils.

Die vorveröffentlichte DE 38 36 555 A1 und die vorveröffentlichte EP 0 701 926 A2 zeigen Bedienvorrichtungen für menügesteuerte Funktionen eines Fahrzeugs, die auf einem Bildschirm symbolisch darstellbar und durch ein Betätigungsteil anwählbar sind. Das jeweils als Dreh- /Druckknopf ausgeführte Betätigungsteil ist in eine Stellung bewegbar, die der Lage des Symbols der anwählbaren Funktion auf der Bildschirmoberfläche entspricht. Der Drehknopf hat Raststellungen, die mit anwählbaren Funktion auf dem Bildschirm korrelieren. Die Multifunktions-Bedieneinrichtung nach der EP 0 701 926 A2 ist dabei mit einem nichtmechanischen "Anschlag" versehen, der zwar ein ungehindertes Weiterdrehen des Bedienknopfs bei Erreichen eines endseitigen Menüpunkts auf dem Bildschirm ermöglicht, wobei sich jedoch der Menüpunkt und damit die Bildschirmanzeige nicht mehr ändert.

Dem nächstkommenden Stand der Technik entsprechend offenbart die auf einen Automobilzulieferer zurückgehende DE 42 05 875 A1 eine Bedienvorrichtung für menügesteuerte Funktionen, die auf einem Bildschirm symbolisch darstellbar und durch eine Betätigungsteil (Drehsteller) anwählbar sind. Dabei ist das Betätigungsteil zwischen (über das eingesteuert erzeugte Moment (Md) simulierten) Anschlägen in eine Stellung bewegbar, die der Lage des Symbols der anwählbaren Funktion auf der Bildschirmoberfläche entspricht. Bei einer Änderung der anwählbaren Funktion durch Bewegen des Betätigungsteils erfolgt eine haptische Rückmeldung an das Betätigungsteil, und die Intensität der haptischen Rückmeldung nimmt zu den Anschlägen hin zu.

Der Erfindung liegt die Aufgabe zugrunde, eine Bedienvorrichtung der eingangs genannten Art zu schaffen, die für den Einsatz in Fahrzeugen optimal angepaßt ist und die die räumliche Trennung von Betätigungsteil und Bildschirmoberfläche ermöglicht. Letzteres bietet den Vorteil der optimalen Anordnung von Bildschirm und Betätigungsteil. Der Bildschirm läßt sich im Blickfeld des Fahrzeugbenutzers, das Betätigungsteil im Griffbereich anordnen.

Die Erfindung löst diese Aufgabe durch die Merkmale des Patentanspruchs 1.

Die mechanische Bewegung des Betätigungsteils wird auf der Bildschirmoberfläche abgebildet. Gleichzeitig wird durch die haptische Rückmeldung jede Änderung der angewählten Funktion auch ohne Blickzuwendung auf den Bildschirm bzw. das Betätigungsteil erkennbar. Es ist damit möglich, die angewählte Funktion "blind" zu verändern. Auch das Verlassen der Bildschirmoberfläche wird durch den mechanischen Anschlag verhindert. Die Gefahr einer unerwünschten, durch äußere Einflüsse bedingten Veränderung der angewählten Funktion wird durch den mit der haptischen Rückmeldung verbundenen mechanischen Widerstand für die Bewegung des Betätigungsteils verhindert. Auch wenn Anwahl und Auswahl der gewünschten Funktion mit deutlichem zeitlichen Abstand vorgenommen werden, besteht nicht die Gefahr der zwischenzeitlich ungewollten Veränderung der ausgewählten Funktion durch unerwünschtes Verändern der Lage des Betätigungsteils.

Anhand der Zeichnung ist die Erfindung weiter erläutert. Es zeigt
- Fig. 1: ein erstes Ausführungsbeispiel in perspektivischer Darstellung, das nicht Gegenstand der Ansprüche ist,
- Fig. 2 und 3: Einzelheiten von Fig. 1 in Seiten- und in Draufsicht und
- Fig. 4 bis 6: weitere Ausführungsbeispiele, ebenfalls in perspektivischer Ansicht die nicht Gegenstand der Ansprüche sind, und
- Fig. 7 und 8: Darstellungen zur Erläuterung der Wirkungsweise der in den Fig. 1 bis 6 dargestellten Bedienvorrichtungen sowie
- Fig. 9: ein weiteres Ausführungsbeispiel, das Gegenstand der Ansprüche ist.

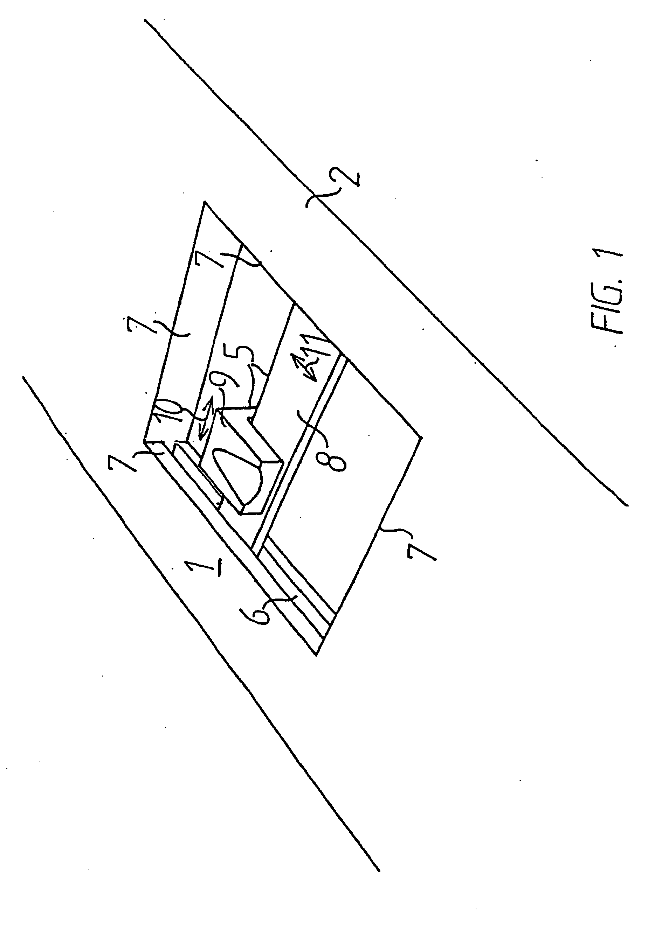

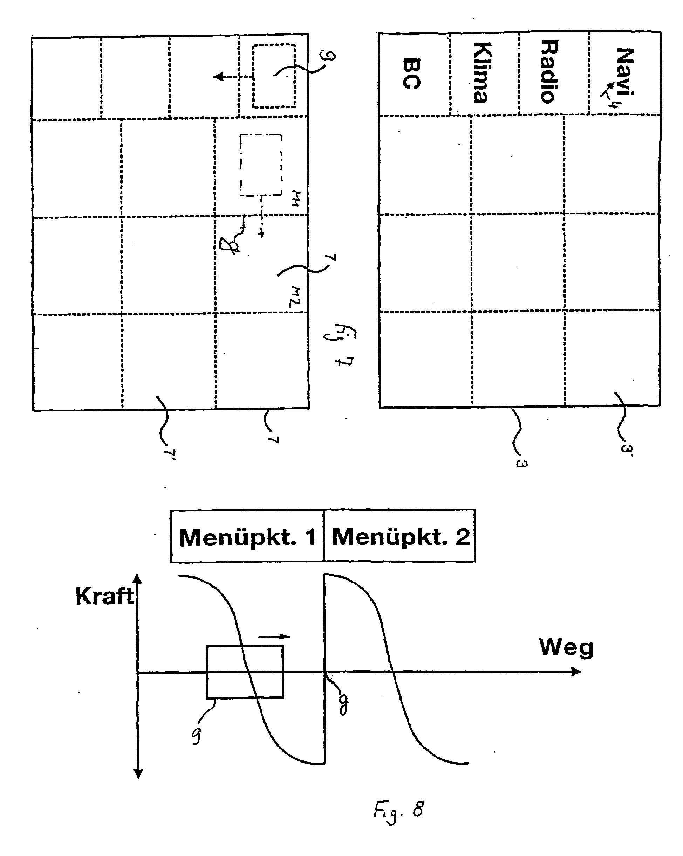

Die in Fig. 1 gezeigte Bedienvorrichtung 1 ist der Mittelkonsole 2 eines Fahrzeugs (nicht dargestellt) eingebaut. Sie dient dazu, die Auswahl eines Menüs, Teilmenüs bzw. einer in einem Teilmenü enthaltenen Funktion des Fahrzeugs auszuwählen. Hierzu ist das Menü, Teilmenü bzw. die auszuwählende Funktion auf einem Bildschirm 3 (Fig. 7) im Sichtfeld des Fahrzeugbenutzers dargestellt. Mit Hilfe der Bedienvorrichtung 1 wird ein Cursor 4 (Fig. 7) auf der Oberfläche des Bildschirms 3 positioniert. Hierzu dient ein Betätigungsteil 5, das in einem Rahmen 7 verfahrbar ist und in einer Führung 6 verläuft.

Das Betätigungsteil 5 besteht aus einem Schlitten 8, der mit seinen beiden Enden in der Führung 6 verläuft (aufgrund der perspektivischen Darstellung ist lediglich ein Ende des Schlittens 8 zu erkennen) sowie aus einem Schieber 9, der quer zum Schlitten 8 verschiebbar ist. Die durch einen Doppelpfeil 10 angegebenen Bewegungsrichtungen des Schiebers 9 werden im folgenden als horizontal, die durch einen Doppelpfeil 11 symbolisierten Bewegungsrichtungen des Schlittens 8 werden im folgenden als vertikal bezeichnet.

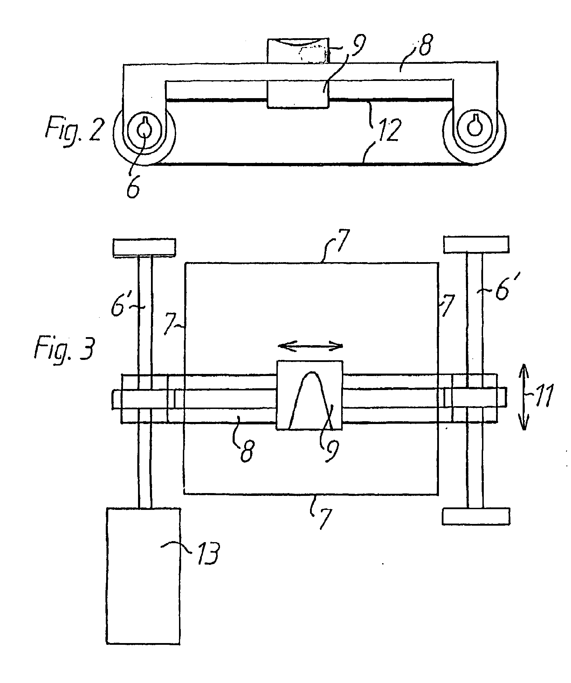

Der innere Aufbau der Bedienvorrichtung von Fig. 1 ist in den Fig. 2 und 3 dargestellt. Die Bewegung des Schiebers 9 auf dem Schlitten 8 wird durch einen umlaufenden Zahnriemen 12 erfaßt und über die drehbare Welle 6' der Führung 6 in eine Drehbewegung umgesetzt. Diese Drehbewegung wird durch einen Elektromotor 13 erfaßt und in Stellbefehle für den Cursor 4 umgesetzt. Mit Hilfe des Elektromotors 13 ist es auch möglich, die Bewegung des Schiebers 9 zu unterstützen bzw. haptisch eine Rückmeldung an den Bediener zu geben. Hierzu kann über eine nicht dargestellte Wegerfassung der Elektromotor 13 so angesteuert werden, daß er in einem mittleren Bewegungsbereich des Schiebers 9, d.h. entfernt von dem durch den Rahmen 7 gegebenen Anschlag ein Moment auf den Zahnriemen 12 und damit den Schieber 9 aufbringt, das dem durch die Reibung der mit dem Schieber bewegten Elemente wie Führungen 6' und Zahnriemen 12 hervorgerufenen Reibungsmoment entgegengerichtet ist. Bewegt sich der Schieber 9 zum Rahmen 7 hin, so kann anstelle eines unterstützenden Moments ein Moment aufgebracht werden, das in seiner Wirkung die Wirkung dieser Reibungsmomente verstärkt. Der Bediener erhält damit zusätzlich eine taktile Rückmeldung über die Stellung des Schiebers 9 innerhalb des gesamten, durch die beiden Anschläge am Rahmen 7 gegebenen Bewegungsbereich.

Bei der Vertikalbewegung des Schlittens 8 kann haptisch eine Rückmeldung an den Bediener bei Erreichen definierter Stellungen vorgenommen werden. Diese haptischen Rückmeldungen können beispielsweise erzeugt werden, indem z.B. über Permanentmagnete im bewegten und im statischen Teil ein ähnliches Kraft-Weg-Verhalten wie im oben beschriebenen Verfahren mit E-Motor erreicht wird (aber mit ortsfesten taktilen Rückmeldungen) oder indem auch für die Vertikalbewegung ein E-Motor eingesetzt wird.

Damit erhält der Bediener stets eine Rückmeldung, in welcher Stellung sich der Schieber 9 befindet. Diese Rückmeldung wird ohne Blickzuwendung auf die Bedieneinrichtung erzielt. Der Fahrzeugbenutzer braucht sich lediglich auf den Bildschirm zu konzentrieren und kann dort erkennen, welche der dort dargestellten Funktionen, Teilmenüs bzw. Menüs durch eine entsprechende Stellung des Schiebers 9 innerhalb des gesamten, durch den Rahmen 7 begrenzten Betätigungsfeld eingestellt ist.

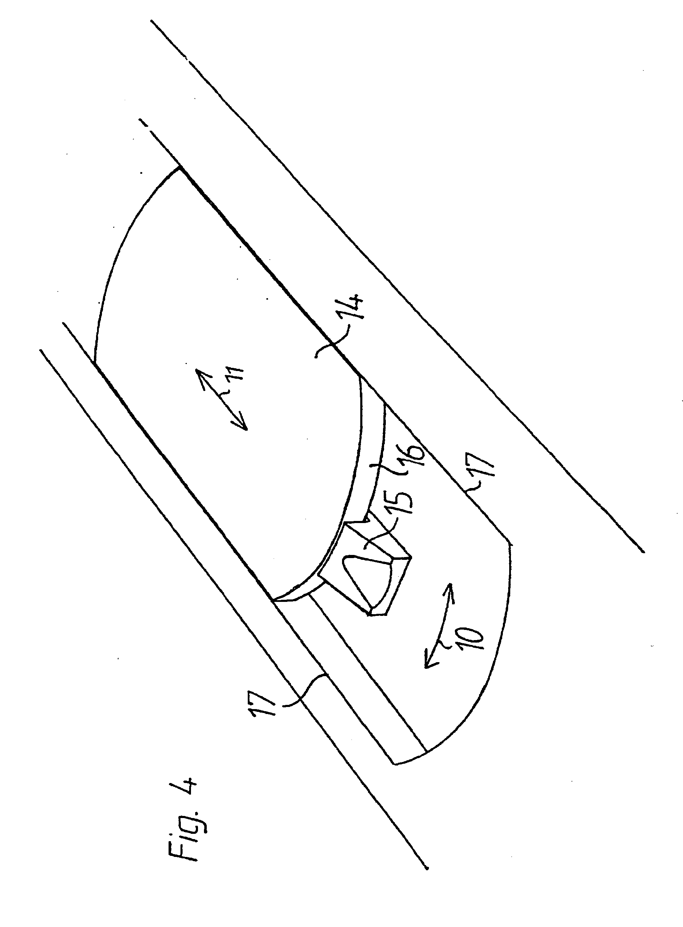

Beim Ausführungsbeispiel von Fig. 4 ist anstelle eines in zwei Richtungen direkt verschiebbaren Betätigungsteils ein Aufbau gewählt, der aus einem in vertikaler Richtung verschiebbaren Körper 14 und einem demgegenüber verschwenkbaren Betätigungsteil 15 besteht. Das Betätigungsteil 15 ist am Körper 14 befestigt und um dessen abgerundete Vorderseite 16 herum bewegbar. Durch Bewegen des Körpers 14 innerhalb eines Rahmens 17, der dem Rahmen 7 entspricht, und bei dem es sich wiederum um die vertikale Bewegung entsprechend dem vorher beschriebenen Ausführungsbeispiel handelt, sowie die überlagerte Schwenkbewegung entsprechend der horizontalen Bewegung des Betätigungsteils 15 wird es wiederum möglich, durch eine entsprechende Stellung des Betätigungsteils 5 innerhalb des Betätigungsfelds (begrenzt durch den Rahmen 17) eine zugeordnete Funktion und dgl. auf dem Bildschirm 3 anzuwählen. Auch hier ist es möglich, die Bewegung des Körpers 14 und des Betätigungsteils 15 durch eine haptische Rückmeldung zu überlagern und damit dem Bediener ohne Blickzuwendung einen Eindruck zu vermitteln, an welcher Stelle sich das Betätigungsteil 15 befindet und damit welches der auf dem Bildschirm 3 wiedergegebenen Elemente angewählt ist. Auch wird es dadurch wie vorhin beschrieben möglich, den Übergang von einem Bildschirm-Element zum nächsten fühlbar zu machen.

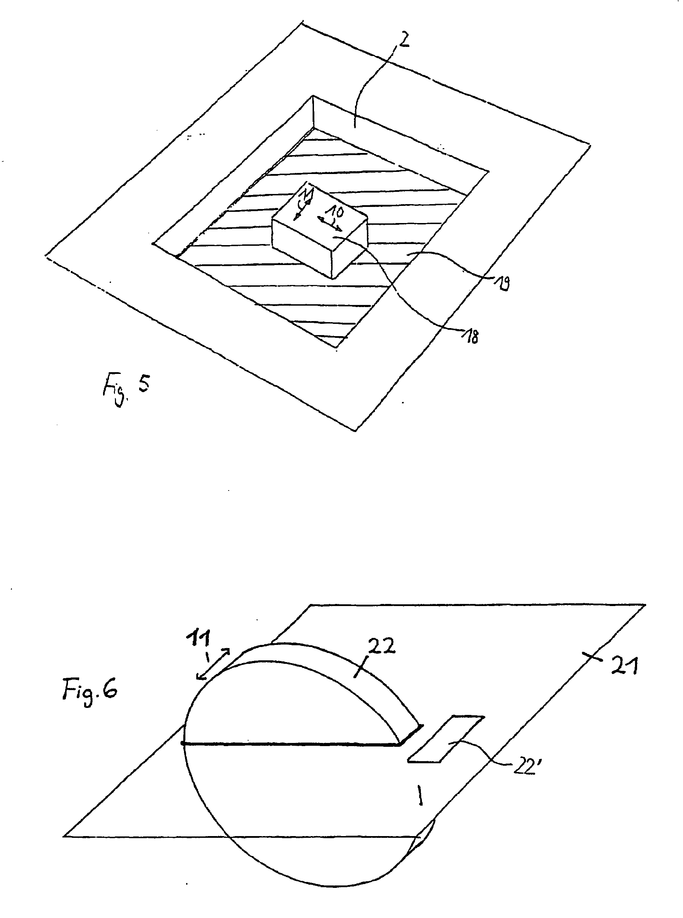

Beim Ausführungsbeispiel von Fig. 5 befindet sich ein Betätigungsteil 18 auf einer Platte 19, die in horizontaler und vertikaler Richtung beweglich ist. Die entsprechenden Pfeile 10 und 11 geben die möglichen Bewegungsrichtungen der Platte 19 an. Die Bewegung der Platte 19 wird begrenzt durch einen Anschlag, der durch einen Rahmen 20 gebildet ist und gegen den das Betätigungsteil 18 an den Grenzen seines Bewegungsbereichs anstößt. Durch eine entsprechende Transmission und dgl. ist es auch hier wiederum möglich, die Lageänderung des Betätigungsteils 18 und damit der Platte 19 zu erkennen und damit ein von den auf dem Bildschirm 3 angewählten Bildschirm-Elementen zu erhalten.

Beim Ausführungsbeispiel von Fig. 6 ist wiederum eine Platte 21 entsprechend der Platte 19 vorgesehen, die ausschließlich in vertikaler Richtung (Pfeil 11) verschiebbar ist. Auf der Platte 21 drehbeweglich gelagert ist ein Drehknopf 22, der aus der Oberfläche der Platte 21 hervorsteht und der gedreht werden kann. Die Drehbewegung des Drehknopfs 22 kann durch einen mechanischen Anschlag begrenzt sein, sie kann aber auch als Endlos-Drehbewegung ausgebildet sein. Die Drehbewegung selbst kann durch Raststellungen eine haptische Rückwirkung erzeugen. Ebenso kann die Vertikalbewegung der Platte 21 bei Erreichen bzw. Überschreiten definierter Stellungen eine taktil erkennbare Rückmeldung an den Bediener abgeben.

Anhand von Fig. 7 ist der Zusammenhang zwischen der Stellung des jeweiligen Betätigungsteils (9, 15, 18 bzw. 22) innerhalb der Bedienvorrichtung der Figuren 1 bis 6 und der auf dem Bildschirm 3 angewählten Funktion, dem Teilmenü bzw. dem Menü (im folgenden Bild-Element) auf dem Bildschirm 3 geschrieben. Mit Hilfe des Betätigungsteils, beispielsweise 9 von Fig. 1 bis 3 wird ein Cursor 4 gesteuert, der sich auf der Oberfläche des Bildschirms 3 bewegt und dessen Stellung der Stellung des Betätigungsteils 9 innerhalb des Bedienfeldes 7' entspricht. Das Bedienfeld 7' ist für das Ausführungsbeispiel der Figuren 1 bis 3 durch den Rahmen 7 begrenzt. Die Oberfläche 3' des Bildschirms 3 ist in eine Anzahl von Felder aufgeteilt, deren Begrenzungen durch strichliierte Linien symbolisiert ist In einer linken Spalte befinden sich beispielsweise vier Felder, die insgesamt vier Menüs, nämlich für Navigation, Radio, Klimaanlage bzw. Bordcomputer (BC) zugeordnet sind.

Die Bedienfläche 7' der Bedienvorrichtung ist, wie in Fig. 1 gezeigt, durch den Rahmen 7 begrenzt. Sie befindet sich im Griffbereich. Innerhalb der Bedienfläche 7' ist das Betätigungsteil 9 beweglich. Durch Verschieben des Betätigungsteils 9 läßt sich ein Menü bzw. eine Funktion des Menüs auswählen, die dem Bildschirm 3 an einer Stelle angeordnet ist, die der jeweiligen Lage des Betätigungsteils 9 zugeordnet ist. Zur besseren Verdeutlichung ist die Bedienfläche 7 in eine entsprechende Anzahl von Felder aufgeteilt. Die Felder sind zur Verdeutlichung ebenfalls durch strichliierte Linien begrenzt.

Befindet sich das Betätigungsteil 9 an der eingezeichneten Stelle am linken oberen Rand der Bedienfläche 7' so ist der in seiner Lage korrespondierende Cursor 4 in der dargestellten Stellung erkennbar und damit das dem Bildelement zugeordnete Menü "Navigationssystem" angewählt. Wird das Betätigungsteil 9 vertikal verschoben (in der Figur nach unten), so gelangt es in das benachbarte Feld. Der synchron sich bewegende Cursor nimmt damit eine Stellung ein, in der das nächste Menü, hier "Radioeinstellung" angewählt ist. Auf diese Weise läßt sich durch eine Vertikalbewegung des Betätigungsteils 9 in der dargestellten Weise, d.h. bei Bewegen am linken Rahmen 7 das gewünschte Menü anwählen.

Zur Auswahl des gewünschten Menüs ist ferner ein Auslöseschalter 22' vorgesehen, der am Rande des Bedienfeldes 7 oder im Ausführungsbeispiel von Fig. 6 neben dem Betätigungsglied 22 sitzt und bei dessen Betätigen das angewählte Menü ausgewählt wird. Auch ist es möglich, den Auslöseschalter mit dem Betätigungsteil zu integrieren und wie beispielsweise in der DE 38 36 555 A beschrieben, durch eine Bewegung des Schalters senkrecht zur Bewegungsebene des Betätigungsteils die jeweilige Schaltfunktion auszulösen.

Mit dem Auswählen des jeweiligen Menüs verbunden ist die Darstellung der Funktionen des Menüs in den zugeordneten Feldern der Oberfläche 3'. Hier sind durch die strichliierten Linien abgetrennt insgesamt neun Felder dargestellt, in denen diese Funktionen angezeigt werden. Die Auswahl der gewünschten Funktion kann in entsprechender Weise durch entsprechende Justierung des Betätigungsteils 9 in dem Feld der Bedienfläche 7' erfolgen, das dem Feld in der Oberfläche 3' räumlich entspricht. Die Auswahl der Funktion kann mit Hilfe des Auslöseschalters, wie für das Menü beschrieben, erfolgen.

Die Einstellung des Betätigungsteils und damit die Anwahl des gewünschten Bildelements und damit der dem Bildelement zuordneten Funktion bzw. des zugeordneten Menüs der Bildschirmfläche 3' wird unterstützt durch eine haptische Rückmeldung, die für den Bediener am Betätigungsteil 9 fühlbar ist. Zum einen ist die Bewegung des Betätigungsteils 9 durch den Rahmen 7 begrenzt. Der Bediener erhält damit unmittelbar eine Information, an welcher Stelle innerhalb des Bedienfeldes 7' sich das Betätigungsteil 9 befindet. Ferner kann, wie anhand von Fig. 2 und 3 beschrieben, die Bewegung des Betätigungsteils in horizontaler Richtung mit Hilfe des Elektromotors 13 unterstützt werden. Schließlich kann bei Überschreiten einer durch eine strichliierte Linie dargestellten Feldbegrenzung durch eine entsprechende haptische Rückmeldung dem Bediener signalisiert werden, daß er das zunächst eingestellte Feld verläßt und er sich nun in dem in vertikaler bzw. horizontaler Richtung anschließenden Feld befindet und er damit beispielsweise das nächste Menü bzw. die nächste Funktion angewählt hat.

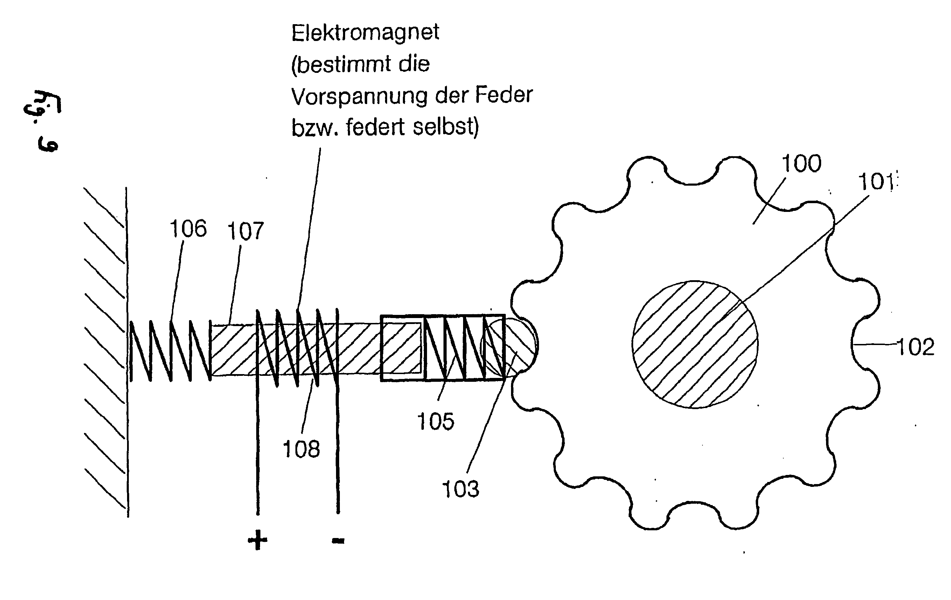

Hierzu sei die Bewegung des Betätigungsteils 9, ausgehend von der in Fig. 7 strichpunktiert eingezeichneten Lage in einem Feld M1 (entsprechend Menüpunkt 1) in das benachbarte Feld M2 (entsprechend Menüpunkt 2) betrachtet. Über einen nicht dargestellten Stellungsgeber wird die Ausgangslage des Betätigungsteils 9 festgestellt. Über den Elektromotor wird bei der Verschiebung von M1 nach M2 eine Kraft aufgebracht, die im Diagramm von Fig. 8 dargestellt ist. In der Ausgangslage in der Mitte des Feldes M1 wirkt keine Kraft auf das Betätigungsteil. Nähert er sich der durch eine strichlierte Linie angedeuteten (imaginären) Grenze zwischen den Feldern M1 und M2, so wird mit zunehmender Annäherung eine sich stets vergrößernde Kraft durch eine entsprechende Ansteuerung des Elektromotors aufgebracht, die der Bewegung entgegengerichtet ist. Dies wird durch das negative Vorzeichen der Kraft angedeutet. Beim Überschreiten der Grenze zwischen den Feldern M1 und M2 findet ein Richtungswechsel der Kraft statt, der im Idealfall sprungartig verläuft, angedeutet durch den senkrechten Kraftverlauf an der Grenze g. Überschreitet das Betätigungsteil 9 die Feldgrenze, so wird nunmehr die Kraftrichtung umgedreht und zunächst eine relativ hohe, mit zunehmendem Abstand von der Feldgrenze sich verringernde Kraft in Bewegungsrichtung auf das Betätigungsteil 9 ausgeübt. Dies wird durch das positive Vorzeichen und den sich zur Mitte des Feldes M2 sich verkleinernden Wert der Kraft angedeutet. Befindet sich das Betätigungsteil in der Mitte des Feldes M2, so wirkt wiederum keine Kraft auf das Betätigungsteil. Die Kraft besitzt demnach den Wert 0.

Auf diese Weise wird es möglich, ohne Hinwendung zum Bedienfeld den Cursor 4 innerhalb der Oberfläche 3' zu steuern und damit die gewünschte Funktion bzw. das gewünschte Menü anzuwählen und mit Hilfe des Auslöseschalters auszuwählen. Die Anordnung des Bedienfeldes 7 kann im Griffbereich, die der Oberfläche 3' des Bildschirm 3 im Sichtfeld des Fahrzeugbenutzers vorgenommen werden. Durch die haptische Rückmeldung wird die Blickzuwendungszeit verringert und somit die Fahrsicherheit gesteigert.

In Fig 9 ist eine beanspruchte Ausgestaltung der Erfindung dargestellt, bei der die taktile Rückmeldung zu den Anschlägen hin zunimmt und das Betätigungsteil um eine Achse drehbar ist. Durch besondere konstruktive Maßnahmen soll bei konstruktiv einfachem Aufbau die Bedienungsfreundlichkeit verbessert werden.

Dabei besitzt das Betätigungsteil 100 eine Drehachse 101. An seinem Rande 102 ist das Betätigungsteil 100 geriffelt, d. h. mit einer Reihe von Einkerbungen und Erhebungen versehen. Die Zahl der Einkerbungen kann beispielsweise gleich der Zahl der Menüpunkte sein.

Das Betätigungsteil 100 wirkt mit einem Gegenteil 103 zusammen, bei dem es sich um eine federbelastete Kugel handelt. Diese ist federnd gelagert und stützt sich gegenüber einem Anschlag 104 ab. Zur Lagerung der Kugel 103 sind Federn 105 und 106 vorgesehen. Ferner befindet sich ein Elektromagnet, bestehend aus einem Stabmagnet 107 und einer Spule 108 zwischen den Federn 105 und 106 angeordnet.

Mit Hilfe des Elektromagneten 107/108 ist die Stellung der Kugel 103 einstellbar. In der eingezeichneten Stellung rastet die Kugel 103 in einer Vertiefung. Es ist jedoch eine Drehbewegung des Betätigungsteils 100 möglich. Dabei wird die Kugel 103 entgegen der Wirkung der Federn 105 und 106 durch die.sich an die Vertiefung anschließenden Erhebungen zurückgedrängt, um dann unter der Wirkung der Federn 105 und 106 in die nächste Vertiefung einzugreifen.

Kräftemäßig vollzieht sich die Bewegung des Betätigungsteils dabei zunächst mit einer ständig zunehmenden Gegenkraft bis hin zur maximalen Zurückdrängung der Kugel 103 durch die Erhebung sowie einer anschließenden ständigen Verringerung der Betätigungskraft, die bis hin zu einer Unterstützung der Drehbewegung des Betätigungsteil unter der Wirkung der Federn 105 und 106 gehen kann.

Mit Hilfe des Elektromagneten 107/108 ist es möglich, die Kugel 103 in einer variablen Stellung bezüglich des Betätigungsteils 100 einzustellen. So kann die Kugel 103 vollständig aus dem Eingriffsbereich des Rands 102 zurückgezogen sein. Die Kugel 103 wirkt dann nicht mehr mit dem Betätigungsteil 100 zusammen. Dieses ist dann völlig frei drehbar. Dadurch ist beispielsweise ein schneller Wechsel der Menüpunkte ohne gleichzeitige taktile Rückmeldung der einzelnen Menüpunkte entsprechend vorgegebener Raststellen des Betätigungsteils 100 möglich.

Entsprechend kann die Kugel 103 auch unter der Wirkung des Elektromagneten 107/108 mit großer Kraft in die Vertiefung des Rands 102 eingedrückt sein. Die Feder 105 kann beispielsweise sogar auf Block gehen. Damit wird die Drehbewegung des Betätigungsteils 100 blockiert. Dies kann beispielsweise dazu dienen, einen mechanischen Anschlag des Betätigungsteils 100 zu simulieren.

Es ist auch möglich, die auf die Kugel 103 wirkende Kraft durch eine variable Strombeaufschlagung der Spule 108 während der Drehbewegung des Betätigungsteils zu variieren, um dadurch beispielsweise während eines Teils der Drehbewegung den mechanischen Widerstand, der durch die Kugel 103 ausgeübt wird, konstant zu halten. Hierzu wird die Kugel 103 entsprechend der durch den Rand 102 vogegebenen Bewegungsbahn durch den Elektromagneten 107/108 bewegt. Damit wird für den Bediener die Form des Randes 102 während dieses Teils der Drehbewegung nicht spürbar.

Bei einem Stromausfall wird der Elektromagnet 107/108 unwirksam. Die Federn 105 und 106 sorgen für den Erhalt der taktilen Rückmeldung und gewährleisten damit einen Notbetrieb der Bedienvorrichtung.

## Patentansprüche

1. Bedienvorrichtung für menügesteuerte Funktionen eines Fahrzeugs, die auf einem Bildschirm symbolisch darstellbar und durch ein Betätigungsteil anwählbar sind, wobei das Betätigungsteil (9, 15, 18, 22) zwischen mechanischen Anschlägen in eine Stellung bewegbar ist, die der Lage des Symbols der anwählbaren Funktion auf der Bildschirmoberfläche (3') entspricht und wobei bei einer Änderung der anwählbaren Funktion durch Bewegen des Betätigungsteils eine haptische Rückmeldung an das Betätigungsteil erfolgt, wobei die Intensität der haptischen Rückmeldung zu den Anschlägen (7, 17) hin zunimmt, wobei das Betätigungsteil (100) um eine Achse drehbar und am Rande geriffelt ist und mit einem Gegenteil (103) zusammenwirkt, das senkrecht zur Drehachse (101) des Betätigungsteils verschiebbar ist.

2. Bedienvorrichtung nach Anspruch 1, **dadurch gekennzeichnet, daß** dem Betätigungsteil ein Auslöseschalter zugeordnet ist, der die angewählte Funktion auslöst.

3. Bedienvorrichtung nach Anspruch 1, **dadurch gekennzeichnet, daß** das Gegenteil drehbar gelagert ist.

4. Bedienvorrichtung nach Anspruch 1 oder 3, **dadurch gekennzeichnet, daß** das Gegenteil federnd gelagert ist.

5. Bedienvorrichtung nach einem der Ansprüche 1, 3 oder 4, **dadurch gekennzeichnet, daß** das Gegenteil in seiner Position bezüglich des Betätigungsteils einstellbar ist.

6. Bedienvorrichtung nach Anspruch 5, **dadurch gekennzeichnet, daß** das Gegenteil in einer Endlage einstellbar ist, in der die Drehbewegung des Betätigungsteils blockiert ist.

7. Bedienvorrichtung nach einem der Ansprüche 1, 3 bis 6, **dadurch gekennzeichnet, daß** das Gegenteil durch einen Elektromagneten bewegt ist.

## Claims

1. A control device for menu-controlled functions of a vehicle which can be represented symbolically on a screen and selected by means of an operating part, wherein the operating part (9, 15, 18, 22) can be moved between mechanical stops into a position which corresponds to the position of the symbol of the selectable function on the surface of the screen (3') and wherein a tactile feedback to the operating part is provided in the event of a change in the selectable function through movement of the operating part, wherein the intensity of the tactile feedback increases toward the stops (7, 17), wherein the operating part (100) is rotatable about an axis and is corrugated around the edge, and interacts with a counterpart (103), which can be displaced perpendicularly to the axis of rotation (101) of the operating part.

2. A control device according to claim 1, **characterised in that** a selector switch which activates the selected function, is assigned to the operating part.

3. A control device according to claim 1, **characterised in that** the counterpart is rotatably mounted.

4. A control device according to claim 1 or 3, **characterised in that** the counterpart is spring-mounted.

5. A control device according to any one of claims 1, 3 or 4, **characterised in that** the position of the counterpart can be adjusted in relation to the operating part.

6. A control device according to claim 5, **characterised in that** the counterpart is adjustable in terms of an end position, in which the rotary movement of the operating part is blocked.

7. A control device according to any one of claims 1, and 3 to 6, **characterised in that** the counterpart is moved by an electromagnet.

## Revendications

1. Dispositif de commande des fonctions d'un véhicule à partir d'un menu, représentées symboliquement sur un écran et que l'on peut sélectionner par une pièce d'actionnement, dans lequel,
la partie d'actionnement (9, 15, 18, 22) peut être déplacée entre des butées mécaniques, dans une position qui correspond à la position du symbole de la fonction sélectionnée sur la surface de l'écran image (3'),
en cas de variation de la fonction sélectionnée par des mouvements de la pièce d'actionnement, il y a un message en retour haptique sur la pièce d'actionnement,
l'intensité du message haptique en retour, augmente en direction des butées (7,17),
la pièce d'actionnement (100) peut tourner autour d'un axe et présente un bord moleté et coopère avec une pièce complémentaire (103) coulissante perpendiculairement à l'axe de rotation (101) de la pièce d'actionnement.

2. Dispositif de commande selon la revendication 1,
**caractérisé en ce que**
la pièce d'actionnement comporte un commutateur de déclenchement qui déclenche la fonction sélectionnée.

3. Dispositif de commande selon la revendication 1,
**caractérisé en ce que**
la pièce complémentaire est montée à rotation.

4. Dispositif de commande selon la revendication 1 ou 3,
**caractérisé en ce que**
la pièce complémentaire est montée à ressort.

5. Dispositif de commande selon l'une des revendications 1, 3 ou 4,
**caractérisé en ce que**
la pièce complémentaire peut être réglée en position par rapport à la pièce d'actionnement.

6. Dispositif de commande selon la revendication 5,
**caractérisé en ce que**
la pièce complémentaire peut être réglée dans sa position de fin de course dans laquelle le mouvement de rotation de la pièce d'actionnement est bloqué.

7. Dispositif de commande selon l'une des revendications 1, 3 à 6,
**caractérisé en ce que**
la pièce complémentaire est déplacée par un électroaimant.
